Europäisches Patentamt

European Patent Office

Office européen des brevets

(11) Veröffentlichungsnummer: **0 419 727 B1**

## (12) EUROPÄISCHE PATENTSCHRIFT

(45) Veröffentlichungstag der Patentschrift: **16.02.94**

(21) Anmeldenummer: **89118086.1**

(22) Anmeldetag: **29.09.89**

(51) Int. Cl.⁵: **H02M 3/335**

(54) Schaltungsanordnung für ein geregeltes Sperrwandler-Schaltnetzteil.

(43) Veröffentlichungstag der Anmeldung:
**03.04.91 Patentblatt 91/14**

(45) Bekanntmachung des Hinweises auf die
Patenterteilung:
**16.02.94 Patentblatt 94/07**

(84) Benannte Vertragsstaaten:
**BE DE ES FR GB IT NL**

(56) Entgegenhaltungen:
**EP-A- 0 144 754**
**EP-A- 0 240 434**

**IBM TECHNICAL DISCLOSURE BULLETIN. vol.
29, no. 11, 11 April 1987, NEW YORK US
Seiten 4948 - 4949; "Switched power supply
synchronized to display"**

(73) Patentinhaber: **SIEMENS AKTIENGESELL-
SCHAFT
Wittelsbacherplatz 2
D-80333 München(DE)**

(72) Erfinder: **Feldtkeller, Martin, Dipl.-Ing.
Josephsburgstrasse 59
D-8000 München 80(DE)**
Erfinder: **Dangschat, Rainer, Dipl.-Ing. (FH)
Jahnstrasse 8
D-8011 Landsham(DE)**

## Beschreibung

Die Erfindung betrifft eine Schaltungsanordnung für ein geregeltes Sperrwandler-Schaltnetzteil, mit folgenden Merkmalen:

1) das Sperrwandler-Schaltnetzteil enthält einen Transformator mit

a) einer Primärwicklung, die im Kreis einer Gleichspannungsquelle in Reihe mit einem elektrischen Schalter liegt, wobei der Schalter alternierend in einer ersten Arbeitsphase (Flußphase) eingeschaltet ist und in einer zweiten Arbeitsphase (Sperrphase) ausgeschaltet ist, und

b) einer Sekundärwicklung, die eine Wechselspannung (Sekundärwicklungsspannung) abgibt, aus der dann eine Gleichspannung (Ausgangsspannung) gewonnen wird;

2) die Schaltungsanordnung enthält zum pulsbreitenmodulierten Schalten des Schalters eine integrierbare Ansteuerschaltung mit

a) einem Regler, der eine Eingangsspannung (Rückkopplungsspannung $U_{RK}$) empfängt, die Rückkopplungsspannung mit einer Sollspannung ($U_{Soll}$) vergleicht und aus der Differenz beider Spannungen eine weitere Spannung (Stellspannung) ableitet, und

b) einem Pulsbreitenmodulator, der in Abhängigkeit von der Stellspannung die Einschaltdauer des Schalters bestimmt, wobei

c) die Rückkopplungsspannung an der Sekundärwicklung abgegriffen wird.

Ein solcher Sperrwandler ist aus der Europäischen Offenlegungsschrift EP 0 144 754 bekannt. Derartige primärgetaktete Schaltnetzteile sollen eine ungeregelte Eingangsspannung in eine stabile Ausgangsspannung umwandeln. Zu diesem Zweck erfaßt man die tatsächliche Spannung am Ausgang, vergleicht sie mit einer Referenzspannung und steuert mit der hieraus gewonnenen Regelabweichung das Tastverhältnis des primärseitigen Schalters.

Bei einem anderen bekannten primärgetakteten Sperrwandler wird ein einer primärseitigen Zusatzwicklung entnommenes Spannungssignal zunächst über einen Tiefpaß geführt, um hochfrequente Anteile auszufiltern, anschließend gleichgerichtet und geglättet und schließlich noch über einen abgleichbaren Spannungsteiler heruntergeteilt, ehe es an eine integrierte Ansteuerschaltung gelangt, in der es dann weiterverarbeitet wird (vgl. hierzu die Siemens-Produktinformation "IC's für die Unterhaltungselektronik", Ausgabe 8.87, in der auf den S. 46 bis 63 der Ansteuerbaustein TDA 4605 beschrieben wird).

Eine solche Signalerfassung ist in mehrfacher Hinsicht noch nicht ganz zufriedenstellend. So entspricht das gefilterte Spannungssignal bei gering belastetem Schaltnetzteil nicht mehr exakt der Ausgangsspannung. Man muß daher zu zusätzlichen Maßnahmen greifen, um etwa im Stand-By-Betrieb die gewünschten Lastspannungen zu erhalten. Hinzu kommt, daß die Signalformung eine nicht unerhebliche Zahl an äußeren Bauelementen verlangt. Der Aufwand an externen und integrierten Schaltmitteln wird dabei noch größer, wenn das Schaltnetzteil auch noch über einen weichen Anlauf verfügen soll. In diesem Fall ist, wie der zitierten Produktinformation zu entnehmen, der Ansteuerbaustein um einen Schaltungsblock zu erweitern, der die Ansteuerimpulse für den Schalter entlang einer Rampenspannung aufsteuert, die von einem weiteren, auf einen eigenen IC-Anschluß geführten Außenkondensator geliefert wird. Weitere Schaltungsblöcke sind erforderlich, wenn das Schaltnetzteil auch noch bei anderen kritischen Regelsituationen, etwa einer ausgangsseitigen Überlastung oder einer Unterbrechung des Regelkreises, vor Beschädigungen geschützt sein soll.

Der Erfindung liegt die Aufgabe zugrunde, die integrierbare Ansteuerschaltung so umzugestalten, daß sie mit einer geringeren Außenbeschaltung eine ausreichende Regelung der Ausgangsspannung gestattet und darüberhinaus die Möglichkeit bietet, zusätzliche Funktionen wie ein weiches Anschwingen, einen Überlastschutz oder eine Hochlaufsperre bei unterbrochener Regelschleife mit minimalem Zusatzaufwand und insbesondere ohne weitere Peripherie- Bauelemente zu realisieren.

Diese Aufgabe wird erfindungsgemäß bei einer Schaltungsanordnung der eingangs genannten Art dadurch gelöst, daß

2)

d) der Regler eine regelnde Gleichrichterschaltung ("aktiver Gleichrichter") enthält, durch die in der Sperrphase ein Kondensator (Regelkondensator) bei $U_{RK} < U_{Soll}$ durch einen an einem Anschluß des Regelkondensators eingeprägten Ladestrom geladen wird und bei $U_{RK} > U_{Soll}$ durch einen am Anschluß des Regelkondensators eingeprägten Entladestrom entladen wird,

e) durch ein die Rückkopplungsspannung mit der Sollspannung vergleichendes Vergleichsmittel gesteuert wird, ob der Ladestrom oder der Entladestrom am Anschluß des Regelkondensators eingeprägt wird, und daß

f) die Spannung des Regelkondensators als Stellspannung dient.

Die hier vorgeschlagene Schaltung bricht mit der bisher befolgten Regel, eine der (gleichgerichteten und gesiebten) Ausgangsspannung proportionale Rückkopplungsspannung zu bilden und den Schalter mit der Abweichung dieser Spannung von einem Sollwert zu tasten. Bei der vorliegenden Erfindung, wird die Rückkopplungsspannung proportional zur (fluktuierenden, mit Vorzeichenwechseln behafteten) Sekundärwicklungsspannung belassen und in der Sperrphase dazu verwendet, eine von einem Regelkondensator bereitgestellte Spannung ("Stellspannung") - durch Auslösen eines Lade- bzw. Entladevorgangs - zu korrigieren. Diese Spannungskorrektur, die man auch als "aktive Gleichrichtung" bezeichnen könnte, ist unempfindlich gegenüber den unvermeidlichen Schwankungen des Regelsignals, etwa dem hochfrequenten sogenannten "Trafoklingeln"; denn die Ladung am Regelkondensator wird per Saldo nicht verändert, wenn das wellige Regelsignal während der Sperrphase die halbe Zeit über und die andere Hälfte der Zeit unter dem Sollwert liegt. Sie kommt darüberhinaus mit nur einem externen Regelkondensator und einer begrenzten Anzahl von relativ einfachen, ohne weiteres integrierbaren Schaltungselementen aus. In einer typischen Ausführung sind dies eine schaltbare 1 mA-Stromquelle und eine schaltbare 1 mA-Stromsenke für den Regelkondensator.

Die integrierbare Steuerschaltung wird auch nur unwesentlich komplizierter, wenn das Schaltnetzteil auch noch weich starten soll. Ein Soft-Start ergibt sich bereits dann, wenn man den Regelkondensator bei eingeschaltetem Gerät ständig mit einem sehr schwachen Strom - typischerweise mit etwa 10 $\mu$A - lädt. Dann erhält nämlich der Regelkondensator automatisch eine die Einschaltdauer des Schalters allmählich verbreiternde Rampenspannung.

Schaltnetzteile sind häufig so ausgelegt, daß ihr Transformator in die Sättigung getrieben wird, wenn die Ansteuerimpulse für den Schalttransistor zu lang werden. Um diesen Effekt, der zur Zerstörung des Schalters führen kann, zu vermeiden, bietet sich folgendes Vorgehen an: Zwischen den Regelkondensator und den Pulsbreitenmodulator fügt man eine spannungsbegrenzende Transferschaltung ein und unterbindet außerdem die von der Rückkopplungsspannung beeinflußte Aufladung des Regelkondensators, wenn die Stellspannung den die Begrenzung auslösenden Wert $U_{gr1}$ erreicht. Wird der Regelkondensator außerdem noch, wie bereits erwähnt, durch eine schwache Stromquelle gespeist, so wird er auch bei Überschreiten von $U_{gr1}$ langsam weitergeladen, solange die Rückkopplungsspannung unterhalb ihres Sollwertes liegt. Steigt die Stellspannung ständig weiter an, so ist dies ein Indiz für eine ausgangsseitige Überlastung. Um in diesem Fall den Betrieb zu unterbrechen, empfiehlt es sich, die Stellspannung bei Überschreiten eines weiteren Grenzwertes $U_{gr2}$ eine Abschaltlogik aktivieren zu lassen, die dann den Schalter sperrt.

Das Schaltnetzteil muß nach einer vDE-Vorschrift so konzipiert sein, daß in der Schaltung bei unterbrochenen oder kurzgeschlossenen Regelkreis-Bauelementen kein Brand entstehen kann. Ein entsprechender Schutz läßt sich bei einer erfindungsgemäßen Schaltungsanordnung besonders elegant einbauen: Jeder moderne Sperrwandler enthält von Hause aus eine Entmagnetisierungsüberwachung, die Ansteuerimpulse für den Schalter erst dann freigibt, wenn die Sekundärwicklungsspannung in der Sperrphase ihre Polarität gewechselt hat. Wird nun das Eingangssignal für die Entmagnetisierungsüberwachung aus dem Rückkopplungssignal vor dem aktiven Gleichrichter abgezweigt, so läuft das Schaltnetzteil bei unterbrochenem Regelkreis nicht hoch; es kann bei fehlendem Entmagnetisierungssignal gar nicht schwingen.

Da eine erfindungsgemäße Schaltungsanordnung mit relativ wenigen IC-Anschlüssen auskommt, eignet sie sich vor allem für festfrequente Sperrwandler, bei denen es schwieriger als etwa bei freischwingenden Sperrwandlern ist, die Pin-Zahl des Ansteuerbausteins in Grenzen zu halten.

Weitere vorteilhafte Ausgestaltungen und Weiterbildungen der Erfindung sind Gegenstand zusätzlicher Ansprüche.

Die Erfindung soll nun anhand eines bevorzugten Ausführungsbeispiels unter Bezugnahme auf die Figuren der beigefügten Zeichnung näher erläutert werden. In den Figuren sind einander entsprechende Teile mit gleichen Bezugszeichen versehen. Es zeigen:

FIG 1     die Schaltung eines mit dem Ausführungsbeispiel versehenen Schaltnetzteils;

FIG 2     von der Schaltung der FIG 1 die integrierbare Ansteuerschaltung, mehr im Detail; und

FIG 3     die Lade- und Entladeströme $I_1$, $I_2$ und $I_3$ des Regelkondensators aus FIG 2, in Abhängigkeit von der Rückkopplungsspannung $U_{RK}$, und zwar bei mehreren Stellspannungen $U_{St}$.

Der Übersicht halber sind die Schaltungsanordnungen in den Figuren nur insoweit dargestellt, als dies für ein Verständnis der Erfindung unbedingt erforderlich ist. Eine ausführliche Erläuterung dieser Schaltungen findet sich in der am gleichen Tag eingereichten, auf den gleichen Erfinder zurückgehenden Patentanmeldung EP 0 419 728 mit den Titel "Schaltungsanordnung für ein festfrequentes Sperrwandler-Schaltnetzteil".

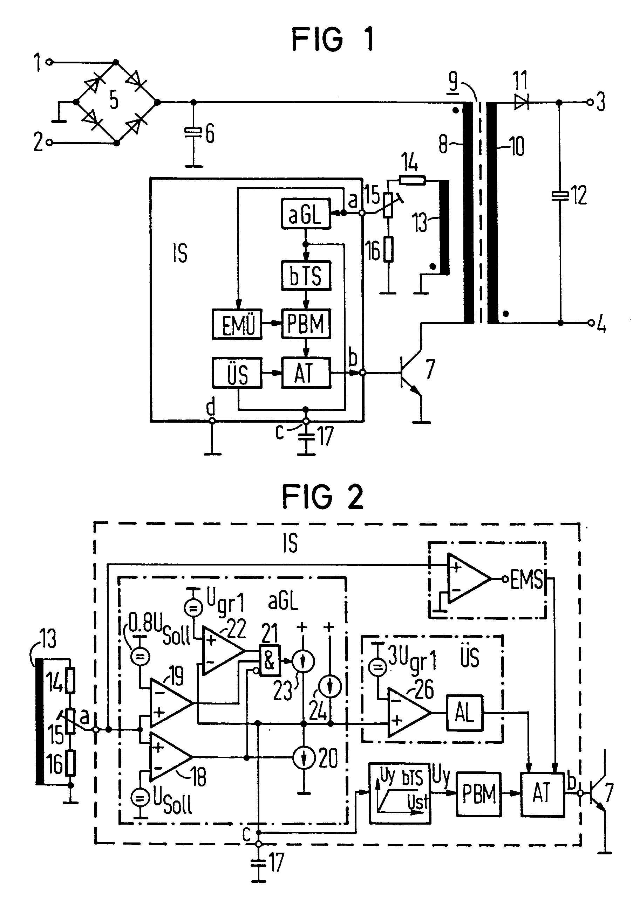

Das Schaltnetzteil der FIG 1 ist ein unter Nennlast festfrequent arbeitender Sperrwandler, der aus einer zwischen den Klemmen 1 und 2 abgenommenen Netzspannung zwischen den Klemmen 3 und 4 eine stabilisierte Gleichspannung erzeugt. Hierzu wird zunächst die Netzspannung in einem Gleichrichter 5 gleichgerichtet, in einem Ladekondensator 6 geglättet und über einen elektrischen Schalter, im vorliegenden Fall einen Bipolar-Transistor 7, auf eine erste Primärwicklung (Speisewicklung 8) eines Transformators 9 geführt. Während der Leitphase des Transistors wird Energie magnetisch im Transformator 9 gespeichert. In der Sperrphase wird diese Energie über eine Sekundärwicklung 10 des Transformators 9 an einen zwischen den Klemmen 3 und 4 liegenden, nicht dargestellten Verbraucher abgegeben. Die am Verbraucher abfallende Spannung ist durch eine Diode 11 und einen weiteren Ladekondensator 12 gleichgerichtet und gesiebt.

Die Schaltung enthält einen Ansteuerbaustein IS, der den Transistor 7 pulsbreitenmoduliert ansteuert. Zur Festlegung des Einschaltzeitpunktes sowie der Einschaltdauer des Transistors 7 erhält der Baustein am Pin a ein erstes Spannungssignal (Rückkopplungsspannung $U_{RK}$). Dieses Signal wird dem Pin aus einer zweiten, mit der Sekundärwicklung 10 fest verkoppelten Wicklung (Regelwicklung 13) über einen aus den Widerständen 14, 15 und 16 gebildeten, abgleichbaren Spannungsteiler zugeführt. An einem weiteren Anschluß (Pin b) gibt der Ansteuerbaustein dann Ansteuerimpulse auf die Basis des Schalttransistors 7. Der Ansteuerbaustein ist außerdem, am Pin c, mit einem nach Masse geschalteten Regelkondensator 17 verbunden und über einen weiteren Anschluß (Pin d) geerdet.

Im Ansteuerbaustein IS wird die Rückkopplungsspannung in einem ersten Zweig auf einen aktiven Gleichrichter aGL geführt, der über eine begrenzende Transferschaltung bTS, einen Pulsbreitenmodulator PBM und einen Ausgangstreiber AT auf den Schalttransistor 7 einwirkt. In einem weiteren Zweig beaufschlagt die Rückkopplungsspannung über eine Entmagnetisierungsüberwachung EMÜ den Pulsbreitenmodulator PBM. Die Spannung des Regelkondensators 17 wird zum einen, vom aktiven Gleichrichter mit Korrekturen versehen, dem Block bTS zugeführt und ist zum anderen mit einer eine Abschaltlogik AL enthaltenden Überwachungsschaltung ÜS verbunden, die ihrerseits den Ausgangstreiber AT beaufschlagt.

Die erwähnten Schaltblöcke des Ansteuerbausteins IS sind in der FIG 2 mehr im einzelnen dargestellt. Die anliegende Rückkopplungsspannung $U_{RK}$ wird im aktiven Gleichrichter aGl zunächst auf die Pluseingänge zweier Komparatoren 18, 19 geführt, deren Minus-Eingänge auf eine Sollspannung $U_{Soll}$ von etwa 2 V (Komparator 18) bzw. auf 0,8 $U_{Soll}$ (Komparator 19) gelegt sind. Der Ausgang des Komparators 18 steuert eine Stromsenke 20, während der Ausgang des Komparators 19 auf einen nicht invertierten Eingang eines UND-Gatters 21 geführt ist. Ein invertierter Eingang dieses Gatters liegt auf der Ausgangsspannung des Komparators 18. Ein weiterer nicht invertierter Gatter-Eingang wird von dem Ausgang eines dritten Komparators 22 beschickt, dessen Pluseingang an einer Begrenzerspannung $U_{gr1}$ (1,5 V) liegt und dessen Minuseingang mit dem Regelkondensator 17 verbunden ist. Die Stromsenke 20 wie auch eine erste und eine zweite, schwache Stromquelle 23 bzw. 24 sind ebenfalls auf den Regelkondensator 17 geführt. Die erste Stromquelle 23 wird dabei durch den Ausgang des UND-Gatters 21 gesteuert.

Der Regelkondensator 17 ist außerdem noch mit der begrenzenden Transferschaltung bTS sowie der Überwachungsschaltung ÜS verbunden. Wie der FIG 2 zu entnehmen, enthält die Überwachungsschaltung außer der Abschaltlogik einen vierten Komparator 26, der die Logik dann aktiviert, wenn die Spannung am Regelkondensator 17 einen weiteren Grenzwert $U_{gr2}$ überschreitet; im vorliegenden Beispiel ist $U_{gr2}$ = 4,5 V.

Im Betrieb des Schaltnetzteils arbeiten die geschilderten Teile des Ansteuerbausteins folgendermaßen:

Während der Sperrphase vergleicht der aktive Gleichrichter die anliegende Rückkopplungsspannung mit dem Sollwert und verändert die Ladung des Regelkondensators; während der Flußphase verhält sich der Gleichrichter neutral. Liegt die Rückkopplungsspannung zwischen 80 % und 100 % ihres Sollwertes, so lädt die gesteuerte Stromquelle 23 den Regelkondensator. Ist die Rückkopplungsspannung größer als der Sollwert, so wird der Regelkondensator durch die gesteuerte Stromsenke 20 entladen. Diesem Lade- bzw. Entladevorgang ist eine kontinuierliche, langsame Aufladung aus der schwachen, etwa 10 $\mu$A abgebenden Stromquelle 24 überlagert. Diese Aufladung, die unabhängig von der Höhe der Sekundärwicklungsspannung nach Einschalten des Geräts erfolgt, sorgt für einen weichen Anlauf.

Die durch die Rückkopplungsspannung korrigierte Stellspannung wird in dem Block bTS linear verstärkt, und zwar solange, bis sie den Wert $U_{gr1}$ erreicht hat. Bei Überschreiten dieses Wertes wird die Ausgangsspannung ($U_Y$) von bTS konstant gehalten. Diese Transferfunktion ist in FIG 2 im Inneren des Schaltungsblocks bTS schematisch dargestellt. Die Begrenzung dient dazu, die Breite der Ansteuerimpulse für den Schalttransistor 7, die von der Höhe der Stellspannung abhängt, nicht über ihren maximal zulässigen Wert steigen zu lassen. Erreicht $U_{St}$ ihren kritischen Wert $U_{gr1}$, so wird auch die Stromquelle 23 abgeschaltet, und zwar in Folge eines Vorzeichenwechsels am zweiten nicht invertierten Eingang des UND-Gatters 21.

Da bei $U_{St}$-Werten > $U_{gr1}$ die schwache Stromquelle 24 weiterhin aktiv bleibt, lädt sich der Regelkondensator 17 weiter auf, solange die Rückkopplungsspannung ihren Sollwert noch nicht erreicht hat. Dabei schaltet die Abschaltlogik den Schalttransistor 7 ab, wenn die Regelkondensatorspannung auch noch den zweiten Grenzwert $U_{gr2}$ übersteigt, um das Schaltnetzteil vor ausgangsseitigen Überlastungen zu schützen.

Bei defekten Regelkreis-Bauelementen können die Ausgangsspannungen des Schaltnetzteils nicht hochlaufen, da die Eingangssignale für die Regelung und für die Entmagnetisierungsüberwachung den gleichen Weg haben.

Die Regelgenauigkeit läßt sich in der Praxis noch erhöhen, wenn man Verhältnis der Stromstärken der Stromquelle 23 und der Stromsenke 20, $I_1$ bzw. $I_2$, in Abhängigkeit von der jeweils eingestellten Impulsbreite des Rückkopplungssignales, d.h. der Höhe der Stellspannung, moduliert. Im vorliegenden Beispiel sind $I_1$ und $I_2$ bei breiten Impulsen, bei denen die Regelkondensatorspannung hoch ist, etwa gleich groß; mit abnehmender Impulsbreite, d.h. mit abnehmenden $U_{St}$-Werten, sinkt $I_1$ und steigt $I_2$, bis beide Ströme bei besonders schmalen Impulsen insgesamt um etwa den Faktor 5 reduziert bzw. vergrößert sind. Daß eine solche Charakteristik, die sich schaltungstechnisch ohne weiteres mit einem weiteren Stromquellen/Stromsenken-Paar und einer $U_{St}$-abhängigen Gewichtung beider Ströme realisieren läßt, die Regelung verbessern kann, hat folgenden Grund. Gibt der Pulsbreitenmodulator kurze Impulse ab, so sind die Impulse der Rückkopplungsspannung ebenfalls schmal, d.h. ihre Flanken nicht mehr vernachlässigbar. Um hier die Amplitude korrekt erfassen zu können, muß eine Spitzenwertgleichrichtung erfolgen. Dementsprechend wird der Regelkondensator in den Zeiten, in denen der Impuls eine Höhe zwischen 0,8 $U_{Soll}$ und $U_{Soll}$ hat, relativ schwach geladen und bei $U_{RK} > U_{Soll}$ rasch entladen. Breite Impulse haben vernachlässigbare Flanken, sind dagegen - aufgrund der hohen übertragenen Leistung - durch hochfrequente Überschwinger gestört. In diesen Fällen ist eine Mittelwertgleichrichtung mit gleichgroßen Lade-und Entladeströmen vorzunehmen.

Bei fest vorgegebenem $U_{Soll}$-Wert gelingt es, wie die Praxis gezeigt hat, nicht ohne weiters, schmale Ansteuerimpulse stets mit einer Spitzenwertgleichrichtung und breite Ansteuerimpulse stets mit einer Mittelwertgleichrichtung zu verarbeiten; insbesondere kann man mitunter ein Hin- und Herpendeln des Regelkreises zwischen beiden Gleichrichtungsarten beobachten. Um diese Instabilitäten zu vermeiden, genügt es, den Sollwert mit abnehmender Impulsbreite etwas anzuheben, etwa von 2 V auf 2,1 V.

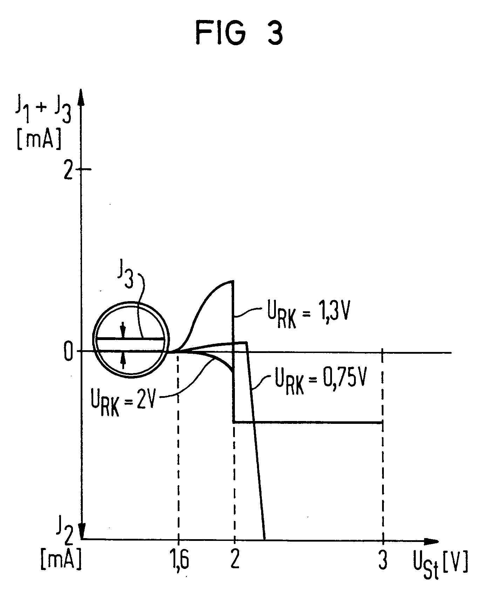

Die Zusammenhänge zwischen den Strömen $I_1$, $I_2$ und $I_3$ sowie den Spannungen $U_{RK}$ und $U_{St}$ sind noch einmal in FIG 3 graphisch dargestellt. Aufgetragen ist dort der Strom am Regelkondensator gegen die rückgekoppelte Spannung $U_{RK}$, und zwar bei 3 verschiedenen Werten der am Regelkondensator anliegenden Spannung (0,75 V, 1,3 V und 2 V). Man erkennt, daß bis zum Schwellenwert 0,8 $U_{Soll}$ (1,6 V) lediglich $I_3$ fließt. Oberhalb von 0,8 $U_{Soll}$ fließt bei einem hohen $U_{St}$-Wert (1,3 V) zunächst ein Ladestrom in Höhe von etwa 1 mA, der sich oberhalb des Sollwertes der Rückkopplungsspannung (2 V) in einen Entladestrom von etwa der gleichen Stromstärke verkehrt. Bei kleiner Regelkondensatorspannung, d.h. schmalen Ansteuerimpulsen bzw. kleiner Ausgangsleistung, wird der Regelkondensator oberhalb des Schwellenwertes mit etwa 1/5 mA entladen; oberhalb eines leicht angehobenen $U_{Soll}$-Wertes (2,1 V) setzt dann eine Entladung mit hoher Stromstärke ein. Liegt die Regelkondensatorspannung oberhalb ihres Grenzwertes (1,5 V), so bleibt die erste Stromquelle auch bei $U_{RK}$-Werten < 2 V abgeschaltet; bei $U_{RK}$-Werten > 2 V wird der Regelkondensator dann mit etwa 1 mA entladen.

In dem geschilderten Ausführungsbeispiel verändert der aktive Gleichrichter in Abhängigkeit von der Ansteuerpulsbreite seine Gleichrichtungsart. Statt dessen könnte man auch eine pulsbreitenabhängige Abtastverzögerung für den Gleichrichter einführen, die bei kurzen Impulsen, d.h. kleiner Ausgangsleistung, kurz ist und sich mit zunehmender Pulsbreite, d.h. größerer Ausgangsleistung, verlängert. Die Information über die Ausgangsleistung kann der Rückkopplungsspannung entnommen werden. Gleichrichter mit einer derart variablen Totzeit sind wenig empfindlich gegenüber den hochfrequenten Schwingungen zu Beginn der Sperrphase (Trafoklingeln) und regeln insbesondere Tonbelastungen (Übersprechen) besser aus.

Die Erfindung ist nicht nur auf das dargestellte Ausführungsbeispiel beschränkt. So kommen neben festfrequenten auch freischwingende Sperrwandler in Frage. Darüberhinaus hat der Fachmann auch noch bei der konkreten Auslegung des Ansteuerbausteins einen erheblichen Gestaltungsspielraum. So wäre es etwa denkbar, die Breite der Ansteuerimpulse mit steigender Regelkondensatorspannung ab- statt zunehmen zu lassen; dann müßte allerdings der Soft-Start anders realisiert werden.

**Patentansprüche**

1. Schaltungsanordnung für ein geregeltes Sperrwandler-Schaltnetzteil, mit folgenden Merkmalen:

   1) das Sperrwandler-Schaltnetzteil enthält einen Transformator mit

      a) einer Primärwicklung, die im Kreis einer Gleichspannungsquelle in Reihe mit einem elektrischen Schalter liegt, wobei der Schalter alternierend in einer ersten Arbeitsphase (Flußphase) eingeschaltet ist und in einer zweiten Arbeitsphase (Sperrphase) ausgeschaltet ist, und

b) einer Sekundärwicklung, die eine Wechselspannung (Sekundärwicklungsspannung) abgibt, aus der dann eine Gleichspannung (Ausgangsspannung) gewonnen wird;

2) die Schaltungsanordnung enthält zum pulsbreitenmodulierten Schalten des Schalters eine integrierbare Ansteuerschaltung mit

a) einem Regler, der eine Eingangsspannung (Rückkopplungsspannung $U_{RK}$) empfängt, die Rückkopplungsspannung mit einer Sollspannung ($U_{Soll}$) vergleicht und aus der Differenz beider Spannungen eine weitere Spannung (Stellspannung $U_{St}$) ableitet, und

b) einem Pulsbreitenmodulator, der in Abhängigkeit von der Stellspannung ($U_{St}$) die Einschaltdauer des Schalters bestimmt, wobei

c) die Rückkopplungsspannung ($U_{RK}$) an der Sekundärwicklung abgegriffen wird;

**dadurch gekennzeichnet,** daß

2)

d) der Regler eine regelnde Gleichrichterschaltung ("aktiver Gleichrichter" aGL) enthält, durch die in der Sperrphase ein Kondensator (Regelkondensator 17) bei $U_{RK} < U_{Soll}$ durch einen an einem Anschluß des Regelkondensators (17) eingeprägten Ladestrom geladen wird und bei $U_{RK} > U_{Soll}$ durch einen am Anschluß des Regelkondensators (17) eingeprägten Entladestrom entladen wird,

e) durch ein die Rückkopplungsspannung ($U_{RK}$) mit der Sollspannung ($U_{Soll}$) vergleichendes Vergleichsmittel (18) gesteuert wird, ob der Ladestrom oder der Entladestrom am Anschluß des Regelkondensators (17) eingeprägt wird, und daß

f) die Spannung des Regelkondensators (17) als Stellspannung ($U_{St}$) dient.

2. Schaltungsanordnung nach Anspruch 1, **dadurch gekennzeichnet,** daß der Regelkondensator (17) zu seiner Ladung und Entladung mit einer eine erste Stromstärke ($I_1$) abgebenden Stromquelle (23) bzw. mit einer eine zweite Stromstärke ($I_2$) aufnehmenden, schaltbaren Stromsenke (20) verbunden ist, wobei die Stromsenke nur bei $U_{RK} > U_{Soll}$ eingeschaltet ist und wobei ferner $|I_2| > |I_1|$ gilt.

3. Schaltungsanordnung nach Anspruch 1, **dadurch gekennzeichnet,** daß der Regelkondensator (17) zum Laden und Entladen mit einer eine erste Stromstärke ($I_1$) abgebenden,

schaltbaren Stromquelle (23) bzw. mit einer eine zweite Stromstärke ($I_2$) aufnehmenden, schaltbaren Stromsenke (20) verbunden ist, wobei Stromquelle (23) einerseits und Stromsenke (20) andererseits nur dann eingeschaltet sind, wenn $U_{RK} < U_{Soll}$ bzw. $U_{RK} > U_{Soll}$ gilt.

4. Schaltungsanordnung nach Anspruch 2 oder 3, **dadurch gekennzeichnet,** daß die Stromquelle (23) nur dann eingeschaltet ist, wenn die Rückkopplungsspannung ($U_{RK}$) größer als ein Schwellwert ($U_{SW}$) ist, wobei insbesondere 0,5 $U_{Soll} < U_{SW} < 0,9\ U_{Soll}$ gilt.

5. Schaltungsanordnung nach Anspruch 4, **dadurch gekennzeichnet,** daß die Rückkopplungsspannung ($U_{RK}$) auf die Pluseingänge zweier Komparatoren (18, 19) geführt ist, daß der Minuseingang des ersten Komparators (18) auf $U_{Soll}$ und der Minuseingang des zweiten Komparators (19) auf $U_{SW}$ liegen, daß die Ausgangsspannung des ersten Komparators (18) auf den Eingang eines Gatters (21) geführt ist und außerdem die Stromsenke (20) schaltet und daß der Ausgang des zweiten Komparators (19) mit einem weiteren Eingang des Gatters (21) verbunden ist, dessen Ausgangsspannung die Stromquelle (23) schaltet, derart, daß sie bei $U_{SW} < U_{RK} < U_{Soll}$ eingeschaltet ist.

6. Schaltungsanordnung nach einem der Ansprüche 2 bis 5, **dadurch gekennzeichnet,** daß der Regelkondensator (17) außerdem mit einer zweiten Stromquelle (24) verbunden ist, die ihn im Betrieb des Schaltnetzteils ständig mit einer dritten Stromstärke ($I_3$) auflädt, wobei $I_3 < 1/10\ I_1$, insbesondere 1/1000 $I_1 < I_3 < 1/50\ I_1$, ist.

7. Schaltungsanordnung nach einem der Ansprüche 1 bis 6, **dadurch gekennzeichnet,** daß zwischen dem Regelkondensator (17) und dem Pulsbreitenmodulator (PBM) eine spannungsbegrenzende Transferschaltung (bTS) eingefügt ist, deren Ausgangsspannung mit zunehmenden $U_{St}$-Werten bis zu einem ersten Stellspannungsgrenzwert ($U_{gr1}$) der Stellspannung proportional ist und ab diesem Grenzwert konstant bleibt.

8. Schaltungsanordnung nach Anspruch 7, **dadurch gekennzeichnet,** daß der Regelkondensator (17) bei $U_{RK} < U_{Soll}$ nur dann geladen wird, wenn auch die Stellspannung unterhalb des ersten Grenzwertes ($U_{gr1}$) bleibt.

9. Schaltungsanordnung nach den Ansprüchen 5 und 8, **dadurch gekennzeichnet,** daß ein dritter Komparator (22) vorgesehen ist, dessen Pluseingang auf $U_{gr1}$ liegt, dessen Minuseingang die Stellspannung ($U_{St}$) empfängt und dessen Ausgang auf einen dritten Eingang des Gatters (21) führt, und daß das Gatter die erste Stromquelle (22) nur dann einschaltet, wenn neben $U_{SW} < U_{RK} < U_{Soll}$ auch $U_{St} < U_{gr1}$ gilt.

10. Schaltungsanordnung nach einem der Ansprüche 1 bis 9, **dadurch gekennzeichnet,** daß eine Überwachungsschaltung (ÜS) den Schalter (7) ausschaltet, wenn die Stellspannung ($U_{St}$) einen zweiten Grenzwert ($U_{gr2}$) überschreitet, wobei vorzugsweise $2\,U_{gr1} < U_{gr2} < 5\,U_{gr1}$ gilt.

11. Schaltungsanordnung nach Anspruch 9 oder 10, **dadurch gekennzeichnet,** daß der Regelkondensator (17) außerdem noch mit dem Pluseingang eines vierten Komparators (26) verbunden ist, dessen Minuseingang auf $U_{gr2}$ liegt und dessen Ausgang mit einer Abschaltlogik (AL) verbunden ist, die das Einschalten des Schalters (7) bei $U_{St} > U_{gr2}$ verhindert.

12. Schaltungsanordnung nach einem der Ansprüche 1 bis 11, **dadurch gekennzeichnet,** daß mit abnehmender Impulsbreite der Rückkopplungsspannung die erste Stromstärke ($I_1$) kleiner und die zweite Stromstärke ($I_2$) größer wird.

13. Schaltungsanordnung nach Anspruch 12, **dadurch gekennzeichnet,** daß bei breiten $U_{RK}$-Impulsen $I_1$ etwa so groß wie $I_2$ ist.

14. Schaltungsanordnung nach Anspruch 13, **dadurch gekennzeichnet,** daß mit abnehmender Impulsbreite der Rückkopplungsspannung $I_1$ insgesamt um einen zwischen 2 und 10 liegenden Faktor abnimmt und $I_2$ insgesamt um einen Faktor größer als 2 zunimmt, insbesondere beide Stromstärken insgesamt um den gleichen, etwa bei 5 liegenden Faktor ab- bzw. zunehmen.

15. Schaltungsanordnung nach einem der Ansprüche 1 bis 11, **dadurch gekennzeichnet,** daß der aktive Gleichrichter (aGL) in der Sperrphase auf die Rückkopplungsspannung ($U_{RK}$) erst dann mit der Ladung bzw. Entladung des Regelkondensators (17) reagiert, wenn ab Beginn der Sperrphase eine vorgegebene Zeit (Totzeit) vergangen ist.

16. Schaltungsanordnung nach Anspruch 15, **dadurch gekennzeichnet,** daß die Totzeit von der Impulsbreite der Rückkopplungsspannung ($U_{RK}$) abhängt, derart, daß sie mit zunehmender Impulsbreite zunimmt und dabei insbesondere von einem bei 1 $\mu$sec liegenden Wert ausgeht.

17. Schaltungsanordnung nach einem der Ansprüche 1 bis 16, **dadurch gekennzeichnet,** daß die Sollspannung ($U_{Soll}$) mit abnehmender Impulsbreite der Rückkopplungsspannung ($U_{RK}$) angehoben wird.

18. Schaltungsanordnung nach einem der Ansprüche 1 bis 17, mit einer Entmagnetisierungsüberwachung, die eine der Sekundärwicklungsspannung wenigstens annähernd proportionale Spannung (Meßspannung) empfängt und das Einschalten des Schalters nur dann freigibt, wenn die Meßspannung in der Sperrphase einen bestimmten Schwellwert passiert hat, **dadurch gekennzeichnet,** daß die Meßspannung aus der Rückkopplungsspannung ($U_{RK}$) abgezweigt wird.

19. Schaltungsanordnung nach einem der Ansprüche 1 bis 18, **dadurch gekennzeichnet,** daß die Rückkopplungsspannung aus einer zweiten primärseitigen Transformatorwicklung (Regelwicklung 13) gewonnen wird, und zwar durch Abgreifen eines im Kreis der Regelwicklung (13) liegenden, vorzugsweise abgleichbaren Spannungsteilers (14, 15, 16), und daß ggf. die Meßspannung ebenfalls dem Abgriff entnommen wird.

**Claims**

1. Circuit arrangement for a regulated flyback-converter switched-mode power supply having the following features:

   1) the flyback-converter switched-mode power supply contains a transformer having

      a) a primary winding which is connected in series with an electrical switch in the circuit of a DC voltage source, the switch alternately being switched on in a first operating phase (flow phase) and being switched off in a second operating phase (blocking phase), and

      b) a secondary winding which emits an AC voltage (secondary winding voltage) from which a DC voltage (output voltage) is then obtained;

   2) for pulse-width modulated switching of the switch, the circuit arrangement contains a drive circuit, which can be integrated, having

      a) a regulator which receives an input voltage (feedback voltage $U_{FB}$), compares the feedback voltage with a required voltage ($U_{Req}$) and derives a further voltage (actuating voltage $U_{Act}$) from the difference between the two voltages, and

b) a pulse-width modulator which determines the switched-on duration of the switch as a function of the actuating voltage ($U_{Act}$),

c) the feedback voltage ($U_{FB}$) being picked off on the secondary winding;

characterized in that

d) the regulator contains a regulating rectifying circuit ("active rectifier" aR) by means of which a capacitor (regulating capacitor 17) is charged during the blocking phase when $U_{FB} < U_{Req}$, by means of a charging current which is impressed at a connection of the regulating capacitor (17), and which is discharged when $U_{FB} > U_{Req}$, by means of a discharging current which is impressed at the connection of the regulating capacitor (17), and

e) is controlled by means of a comparison means (18), which compares the feedback voltage ($U_{FB}$) with the required voltage ($U_{Req}$) depending on whether the charging current or the discharging current is impressed at the connection of the regulating capacitor (17), and in that

f) the voltage of the regulating capacitor (17) is used as the actuating voltage ($U_{Act}$)

2. Circuit arrangement according to Claim 1, characterized in that the regulating capacitor (17) is connected, in order to charge and discharge it, to a current source (23), which emits a first current intensity ($I_1$), or to a switchable current sink (20), which receives a second current intensity ($I_2$), the current sink being switched on only when $U_{FB} > U_{Req}$ and, furthermore, when $|I_2| > |I_1|$.

3. Circuit arrangement according to Claim 1, characterized in that the regulating capacitor (17) is connected, for charging and discharging, to a switchable current source (23), which emits a first current intensity ($I_1$), or to a switchable current sink (20), which receives a second current intensity ($I_2$), the current source (23), on the one hand, and the current sink (20), on the other hand, being switched on only when $U_{FB} < U_{Req}$ or $U_{FB} > U_{Req}$ respectively.

4. Circuit arrangement according to Claim 2 or 3, characterized in that the current source (23) is switched on only when the feedback voltage

($U_{FB}$) is greater than a threshold value ($U_{TH}$) where, preferably, $0.5\ U_{Req} < U_{TH} < 0.9\ U_{Req}$.

5. Circuit arrangement according to Claim 4, characterized in that the feedback voltage ($U_{FB}$) is fed to the positive inputs of two comparators (18, 19), in that the negative input of the first comparator (18) is at $U_{Req}$ and the negative input of the second comparator (19) is at $U_{TH}$, in that the output voltage of the first comparator (18) is fed to the input of a gate (21) and, in addition, switches the current sink (20), and in that the output of the second comparator (19) is connected to a further input of the gate (21) whose output voltage switches the current source (23) in such a manner that it is switched on when $U_{TH} < U_{FB} < U_{Req}$.

6. Circuit arrangement according to one of Claims 2 to 5, characterized in that the regulating capacitor (17) is additionally connected to a second current source (24) which, during operation of the switched-mode power supply, continuously charges said regulating capacitor (17) with a third current intensity ($I_3$), where $I_3 < 1/10\ I_1$, preferably $1/1000\ I_2 < I_3 < 1/50\ I_1$.

7. Circuit arrangement according to one of Claims 1 to 6, characterized in that a voltage-limiting transfer circuit (bTC) is inserted between the regulating capacitor (17) and the pulse-width modulator (PWM), the output voltage of which transfer circuit (bTC) is proportional to the actuating voltage, as the value of $U_{Act}$ increases, up to a first actuating voltage limiting value ($U_{lim1}$), and remains constant above this limiting value.

8. Circuit arrangement according to Claim 7, characterized in that the regulating capacitor (17) is charged when $U_{FB} < U_{Req}$ only when the actuating voltage is also less than the first limiting value ($U_{lim1}$).

9. Circuit arrangement according to Claims 5 and 8, characterized in that a third comparator (22) is provided whose positive input is at $U_{lim1}$, whose negative input receives the actuating voltage ($U_{Act}$) and whose output leads to a third input of the gate (21), and in that the gate switches on the first current source (22) only when $U_{Act} < U_{lim1}$ in addition to $U_{TH} < U_{FB} < U_{Req}$.

10. Circuit arrangement according to one of Claims 1 to 9, characterized in that a monitoring circuit (MC) switches off the switch (7) when the actuating voltage ($U_{Act}$) exceeds a second

limiting value ($U_{lim2}$) where, preferably, 2 $U_{lim1}$ < $U_{lim2}$ < 5 $U_{lim1}$.

**11.** Circuit arrangement according to Claim 9 or 10, characterized in that the regulating capacitor (17) is, in addition, also connected to the positive input of a fourth comparator (26) whose negative input is at $U_{lim2}$ and whose output is connected to a disconnection logic (DL) which prevents the switch (7) switching on when $U_{Act}$ > $U_{lim2}$.

**12.** Circuit arrangement according to one of Claims 1 to 11, characterized in that the first current intensity ($I_1$) becomes smaller and the second current intensity ($I_2$) becomes larger as the pulse width of the feedback voltage decreases.

**13.** Circuit arrangement according to Claim 12, characterized in that $I_1$ is approximately as large as $I_2$ when the $U_{FB}$ pulses are broad.

**14.** Circuit arrangement according to Claim 13, characterized in that, overall, $I_1$ decreases by a factor of between 2 and 10, and, overall, $I_2$ increases by a factor of more than 2 when the pulse width of the feed-back voltage decreases, and, in particular, the two current intensities decrease and increase respectively, overall, by the same factor which is, for example, 5.

**15.** Circuit arrangement according to one of Claims 1 to 11, characterized in that the active rectifier (aR) does not react, in the blocking phase, to the feedback voltage ($U_{FB}$) by charging or discharging the regulating capacitor (17) until a predetermined time (dead time) has elapsed from the start of the blocking phase.

**16.** Circuit arrangement according to Claim 15, characterized in that the dead time depends on the pulse width of the feedback voltage ($U_{FB}$) in such a manner that it increases with increasing pulse width and, in this case, preferably starts from a value of 1 $\mu$s.

**17.** Circuit arrangement according to one of Claims 1 to 16, characterized in that the required voltage ($U_{Req}$) is raised as the pulse width of the feedback voltage ($U_{FB}$) decreases.

**18.** Circuit arrangement according to one of Claims 1 to 17, having a demagnetization monitor which receives a voltage (measurement voltage) which is at least approximately proportional to the secondary winding voltage and enables the switch to switch on only when the measurement voltage has passed a specific threshold value in the blocking phase, characterized in that the measurement voltage is tapped off from the feedback voltage ($U_{FB}$).

**19.** Circuit arrangement according to one of Claims 1 to 18, characterized in that the feedback voltage is obtained from a second transformer winding (regulating winding 13) on the primary side, to be precise by picking off a voltage divider (14, 15, 16), which is located in the circuit of the regulating winding (13) and is preferably adjustable, and in that the measurement voltage is possibly likewise taken from the pick-off.

**Revendications**

**1.** Montage pour un bloc d'alimentation réglé à convertisseur à oscillateur bloqué, présentant les caractéristiques suivantes :

1) le bloc d'alimentation à convertisseur à oscillateur bloqué est pourvu d'un transformateur comportant

a) un enroulement primaire, qui est branché, dans le circuit d'une source de tension continue, en série avec un interrupteur électrique, l'interrupteur étant alternativement fermé dans une première phase de travail (phase de passage) et ouvert dans une seconde phase de travail (phase de blocage), et

b) un enroulement secondaire qui délivre une tension alternative (tension de l'enroulement secondaire), à partir de laquelle est obtenue une tension continue (tension de sortie);

2) le montage comporte, pour la commutation de l'interrupteur modulée selon une modulation d'impulsions en durée, un circuit de commande intégrable comportant

a) un régulateur qui reçoit une tension d'entrée (tension de réaction $U_{RK}$), qui compare la tension de réaction à une tension de consigne ($U_{consigne}$) et produit, à partir de la différence des deux tensions, une haute tension (tension de réglage $U_{St}$), et

b) un modulateur d'impulsions en durée, qui détermine la durée de fermeture de l'interrupteur en fonction de la tension de réglage ($U_{St}$),

c) la tension de réaction ($U_{RK}$) étant prélevée sur l'enroulement secondaire;

remarquable par le fait que

2)

d) le régulateur comporte un circuit redresseur de régulation ("redresseur actif" aGL), à l'aide duquel, pendant la phase de blocage, un condensateur (condensateur de réglage 17) est chargé par un courant de charge injecté au niveau d'une borne du condensateur de réglage (17), lorsque l'on a $U_{RK} < U_{consigne}$, et est déchargé par un courant de décharge injecté au niveau de la borne du condensateur de réglage (17) lorsque l'on a $U_{RK} > U_{consigne}$,

e) est commandé par des moyens comparateurs (18) qui comparent la tension de réaction ($U_{RK}$) à la tension de consigne ($U_{consigne}$), pour déterminer si le courant de charge ou le courant de décharge est injecté au niveau de la borne du condensateur de réglage (17), et

f) la tension du condensateur de réglage (17) est utilisée en tant que tension de réglage ($U_{St}$).

2. Montage suivant la revendication 1, caractérisé par le fait que le condensateur de réglage (17) est raccordé, pour sa charge et sa décharge, à une source de courant (23) délivrant un courant possédant une première intensité ($I_1$) ou à un puits de courant commutable (20), qui reçoit un courant possédant une seconde intensité ($I_2$), le puits de courant étant activé uniquement pour $U_{RK} > U_{consigne}$, alors que par ailleurs on a $|T_2| > |I_1|$.

3. Montage suivant la revendication 1, caractérisé par le fait que le condensateur de réglage (17) est raccordé, pour la charge et la décharge, à une source de courant commutable (23), qui délivre un courant possédant une première intensité ($I_1$), ou à un puits de courant commutable (20), qui reçoit un second courant possédant une seconde intensité ($I_2$), la source de courant (23), d'une part, et le puits de courant (20), d'autre part, étant activés uniquement lorsque l'on a $U_{RK} < U_{consigne}$ ou $U_{RK} > U_{consigne}$.

4. Montage suivant la revendication 2 ou 3, caractérisé par le fait que la source de courant (23) est activée uniquement lorsque la tension de réaction ($U_{RK}$) est supérieure à une valeur de seuil ($U_{SW}$), avec notamment $0,5\ U_{consigne} < U_{SW} < 0,9\ U_{consigne}$.

5. Montage suivant la revendication 4, caractérisé par le fait que la tension de réaction ($U_{RK}$) est appliquée aux entrées positives de deux comparateurs (18,19), que l'entrée négative du premier comparateur (18) est placée à $U_{consigne}$ et que l'entrée négative du second comparateur (19) est placée à $U_{SW}$, que la tension de sortie du premier comparateur (18) est appliquée à l'entrée d'une porte (21) et en outre active le puits de courant (20), et que la sortie du second comparateur (19) est reliée à une autre entrée de la porte (21), dont la tension de sortie commute la source de courant (23) de telle sorte que cette source est activée lorsque l'on a $U_{SW} < U_{RK} < U_{consigne}$.

6. Montage suivant l'une des revendications 2 à 5, caractérisé par le fait que le condensateur de réglage (17) est relié en outre à une seconde source de courant (24), qui le charge en permanence avec un courant possédant une troisième intensité ($I_3$) lors du fonctionnement dudit bloc d'alimentation, avec $I_3 < 1/10\ I_1$, et notamment $1/1000\ I_1 < I_3 < 1/50\ I_1$.

7. Montage suivant l'une des revendications 1 à 6, caractérisé par le fait qu'entre le condensateur de réglage (17) et le modulateur d'impulsions en durée (PBM) est inséré un circuit de transfert (bTS), qui limite la tension et dont la tension de sortie est proportionnelle à la tension de réglage, dans le cas de valeurs de $U_{ST}$ croissantes jusqu'à une première valeur limite ($U_{gr1}$) de la tension de réglage et reste constante à partir de cette valeur limite.

8. Montage suivant la revendication 7, caractérisé par le fait que pour $U_{RK} < U_{consigne}$, le condensateur de réglage (17) est chargé uniquement lorsque, également, la tension de réglage reste inférieure à la première valeur limite ($U_{gr1}$).

9. Montage suivant les revendications 5 et 8, caractérisé par le fait qu'il est prévu un troisième comparateur (22), dont l'entrée positive est placée à $U_{gr1}$, dont l'entrée négative reçoit la tension de réglage ($U_{St}$) et dont la sortie est raccordée à une troisième entrée de la porte (21), et que la porte n'active la première source de courant (22) que lorsqu'en plus de $U_{SW} < U_{RK} < U_{consigne}$, on a également $U_{St} < U_{gr1}$.

10. Montage suivant l'une des revendications 1 à 9, caractérisé par le fait qu'un circuit de contrôle (ÜS) ouvre l'interrupteur (7) lorsque la tension de réglage ($U_{St}$) dépasse une seconde valeur limite ($U_{gr2}$), avec de préférence $2\ U_{gr1} < U_{gr2} < 5\ U_{gr1}$.

11. Montage suivant la revendication 9 ou 10, caractérisé par le fait que le condensateur de réglage (17) est en outre relié à l'entrée positive d'un quatrième comparateur (26), dont l'entrée négative est placée à $U_{gr2}$ et dont la sortie est reliée à un circuit logique de débranchement (AL), qui empêche la fermeture d'interrupteurs (7) lorsque l'on a $U_{St} > U_{gr2}$.

12. Montage suivant l'une des revendications 1 à 11, caractérisé par le fait que lorsque la durée des impulsions de la tension de réaction diminue, la première intensité de courant ($I_1$) diminue et la seconde intensité de courant ($I_2$) augmente.

13. Montage suivant la revendication 2, caractérisé par le fait que dans le cas d'impulsions ($U_{RK}$) larges, $I_1$ est approximativement égal à $I_2$.

14. Montage suivant la revendication 13, caractérisé par le fait que lorsque la durée des impulsions de la tension de réaction diminue, $I_1$ diminue globalement d'un facteur compris entre 2 et 10, et $I_2$ augmente globalement d'un facteur supérieur à 2, et en particulier les deux intensités de courant diminuent ou augmentent globalement du même facteur approximativement égal à 5.

15. Montage suivant l'une des revendications 1 à 11, caractérisé par le fait que le redresseur actif (aGL) réagit, pendant la phase de blocage, à la tension de réaction ($U_{RK}$) uniquement lors de la charge ou de la décharge du condensateur de réglage (17), lorsqu'un intervalle de temps (temps mort) s'est écoulé depuis le début de la phase de blocage.

16. Montage suivant la revendication 15, caractérisé par le fait que le temps mort dépend de la durée des impulsions de la tension de réaction ($U_{RK}$) de telle sorte qu'il augmente lorsque la durée des impulsions augmente et part notamment d'une valeur égale à 1 $\mu$s.

17. Montage suivant l'une des revendications 1 à 16, caractérisé par le fait que la tension de consigne ($U_{consigne}$) augmente lorsque la durée des impulsions de la tension de réaction ($U_{RK}$) diminue.

18. Montage suivant l'une des revendications 1 à 17, comportant une unité de contrôle de désaimantation, qui reçoit une tension (tension de mesure), qui est au moins approximativement proportionnelle à la tension secondaire, et libère la fermeture d'un interrupteur uniquement lorsque la tension de mesure a dépassé une valeur de seuil prédéterminée, pendant la phase de blocage, caractérisé par le fait que la tension de mesure est dérivée de la tension de réaction ($U_{RK}$).

19. Montage suivant l'une des revendications 1 à 18, caractérisé par le fait que la tension de réaction est obtenue à partir d'un second enroulement du transformateur situé côté primaire (enroulement de réglage 13), et ce au moyen d'une prise d'un diviseur de tension (14,15,16) qui est situé dans le circuit de l'enroulement de réglage (13) et peut être de préférence équilibré, et que éventuellement la tension de mesure est également prélevée sur cette prise.

EP 0 419 727 B1

# FIG 1

# FIG 2

FIG 3